# EUROPÄISCHE PATENTSCHRIFT

(11) **EP 2 146 873 B1**
(45) Veröffentlichungstag und Bekanntmachung des Hinweises auf die Patenterteilung: **20.07.2016**
(21) Anmeldenummer: 08717086.6
(22) Anmeldetag: 25.02.2008
(51) Int. Cl.: B60R 21/01, B60R 21/013, B60R 21/0132

(54) **VORRICHTUNG UND VERFAHREN ZUR ANSTEUERUNG VON PERSONENSCHUTZMITTELN**
DEVICE AND METHOD FOR TRIGGERING PERSON PROTECTING MEANS
DISPOSITIF ET PROCEDE DE COMMANDE DE MOYENS DE PROTECTION DE PERSONNES

(30) Priorität: 19.04.2007 DE 102007018468
(43) Veröffentlichungstag der Anmeldung: 27.01.2010
(73) Patentinhaber: Robert Bosch GmbH, 70442 Stuttgart (DE)
(72) Erfinder: WELLHOEFER, Matthias, 70499 Stuttgart (DE); FRESE, Volker, 71701 Schwieberdingen (DE)
(86) Internationale Anmeldenummer: PCT/EP2008/052252
(87) Internationale Veröffentlichungsnummer: WO 2008/128810

(56) Entgegenhaltungen:
- EP-A- 1 710 133
- WO-A-02/092395
- DE-A1-102004 057 689
- DE-A1-102005 044 768

## Beschreibung

### Stand der Technik

Die Erfindung betrifft eine Vorrichtung bzw. ein Verfahren zur Ansteuerung von Personenschutzmitteln nach der Gattung der unabhängigen Patentansprüche.

Aus DE 102 30 485 A1 ist eine Vorrichtung zum Insassenschutz bekannt, bei der eine Plausibilisierung eines ersten Sensorsignals durch ein zweites Sensorsignal erfolgt, wobei die Plausibilität mit einem weiteren Sensor im Vergleich zur Erzeugung des ersten Sensorsignals durchgeführt wird.

Aus der WO 02/092395 A1 ist eine Anordnung zur Seitenaufprallsensierung bekannt, welche in einer baulichen Einheit sowohl einen Temperatursensor als auch einen Beschleunigungssensor umfasst. Jeweils einer der Sensoren wird zur Plausibilitätsprüfung verwendet. Der Beschleunigungssensor mit Messverstärker ist an einen ersten Analog-/Digitalwandler angeschlossen, der die Beschleunigungswerte digitalisiert und an einen Schnittstellenbaustein überträgt. Der Temperatursensor mit einem angeschlossenen Messverstärker ist an einen zweiten Analog-/Digitalwandler angeschlossen, der die Temperatursignale digitalisiert und ebenfalls an den Schnittstellenbaustein überträgt.

### Offenbarung der Erfindung

Die erfindungsgemäße Vorrichtung bzw. das erfindungsgemäße Verfahren zur Ansteuerung von Personenschutzmitteln mit den Merkmalen der unabhängigen Patentansprüche haben demgegenüber den Vorteil, dass das Sensormodul nunmehr wenigstens zwei Sensoren aufweist, die sich in einem Gehäuse befinden und die Signalaufbereitung für die wenigstens zwei Sensoren auf getrennten Hardwarepfaden erfolgt. Damit kann vorteilhafter Weise einem sogenannten Common-Mode-Fehler entgegengewirkt werden. Unter einem sogenannten Common-Mode-Fehler ist ein Fehler zu verstehen, der sowohl den ersten als auch den plausibilisierenden Sensor gleichermaßen beeinträchtigt. Mit einem solchen Fehler könnte eine Fehlaktion ausgelöst werden. Durch die erfindungsgemäße Maßnahme von unterschiedlichen Hardwarepfaden wird es jedoch erreicht, dass sich die beiden Sensoren in einem Sensormodul in einem Gehäuse befinden können und sogar auf einem integrierten Schaltkreis. Es ist jedoch möglich, dass zwei getrennte Substrate in dem einen Gehäuse vorhanden sind. Dies ermöglicht eine erhebliche Flächen- und Kosteneinsparung im Vergleich zu räumlich getrennten Sensoren, die eigene Gehäuse aufweisen müssen.

Zudem ist in dem jeweiligen Hardwarepfad eine Analog-Digitalumsetzung vorgesehen, wobei die Analog-Digitalumsetzung in den jeweiligen Hardwarepfaden erfindungsgemäß mit unterschiedlichen Frequenzen arbeitet. Die Digital-/Analogumsetzer wie auch die digitalen Filter benötigen eine Zeitbasis, was auch für analoge Filter in der sogenannten Switched Capacitor Technologie gilt. Diese Zeitbasis muss entweder im Sensor erzeugt werden oder von außen zugeführt werden. Ein Fehler in der Zeitbasis führt automatisch zu einem Fehler im Signal.

Unter den Personenschutzmitteln sind vorliegend Airbags, Gurtstraffer, crashaktive Kopfstützen und auch aktive Personenschutzmittel wie Bremsen und eine Fahrdynamikregelung zu verstehen. Aber auch andere hier nicht genannte Personenschutzmittel können erfindungsgemäß angesteuert werden.

Unter den Sensormodulen wird vorliegend eine bauliche Einheit verstanden, die ein einziges Gehäuse aufweist, in dem sich die wenigstens zwei Sensoren befinden. Dies kann zum Beispiel ein integrierter Schaltkreis sein. Das Sensormodul kann sich innerhalb oder außerhalb eines Steuergeräts befinden. Das Sensormodul kann insbesondere auch zu einem Sensorcluster ausgebaut sein. Bei den Sensoren handelt es sich beispielsweise um Beschleunigungs- und/oder Drehratensensoren. Die Signalaufbereitung weist beispielsweise analoge und digitale Signalverarbeitungsteile auf, um das eigentliche Sensorsignal für die Übertragung zum Steuergerät bzw. zu einer Auswerteschaltung zu konditionieren.

Die getrennten Hardwarepfade sind physikalisch voneinander getrennt, d. h. die Hardwarepfade weisen keine gemeinsamen Elemente auf, über die die Signale beider Hardwarepfade laufen. Es ist jedoch möglich, dass am Ende die Signale zusammengeführt werden. Dann enden diese Hardwarepfade. Auch Verbindungen zwischen den Hardwarepfaden sind möglich, ohne jedoch, dass die Signale ausgekoppelt werden. Aus den abhängigen Ansprüchen gehen Beispiele für solche Verknüpfungen der Hardwarepfade in vorteilhafter Weise hervor.

Unter einer Auswerteschaltung, die sich üblicherweise im Steuergerät befindet, wird eine solche Schaltung verstanden, die in Abhängigkeit von den Sensorsignalen ein Ansteuersignal für die Personenschutzmittel erzeugt. Dieses Ansteuersignal wird dann üblicherweise von einer Ansteuerschaltung zur Ansteuerung der Personenschutzmittel verwendet. Als Ansteuerschaltung kommt üblicherweise ein Mikrocontroller oder ein anderer Prozessortyp in Frage. Es sind jedoch auch anwenderspezifische integrierte Schaltkreise oder sogar diskrete Auswerteschaltungen möglich.

Aus den in den abhängigen Ansprüchen angegebenen Maßnahmen und Weiterbildungen sind vorteilhafte Verbesserungen der in den unabhängigen Patentansprüchen angegebenen Vorrichtung zur Ansteuerung von Personenschutzmitteln bzw. des in den unabhängigen Patentansprüchen angegebenen Verfahrens zur Ansteuerung von Personenschutzmitteln möglich.

Weiterhin ist es vorteilhaft, dass für den jeweiligen Sensor ein jeweiliger Takt erzeugt wird. Bei Drehratensensoren kann beispielsweise über die Eigenfrequenz dieses Sensors selbst der Takt erzeugt wird, da Drehraten über eine Coriolisbeschleunigung in Schwingsysteme bestimmt werden können. Auch bei plausibilisierenden Beschleunigungssensoren ist eine solche Takterzeugung möglich. Hier kann der Takt von außen zugeführt werden, beispielsweise von dem Mikrocontroller im Steuergerät oder intern durch einen elektronischen Oszillator erzeugt werden.

Es ist weiterhin vorteilhaft, dass ein erster Hardwarepfad den Takt eines zweiten Hardwarepfads überwacht. Damit kann eine gegenseitige Überwachung bezüglich der Takte durch die Hardwarepfade und dabei besonders ausgebildeter Überwachungsschaltkreise vorgenommen werden. Vorliegend müssen zwei Zähler, die die jeweiligen Takte zählen, miteinander verglichen und auf ein festes Verhältnis getestet werden.

Es ist weiterhin vorteilhaft, dass für jeden Hardwarepfad eine jeweilige Spannungsversorgung vorgesehen ist. D. h. pro Hardwarepfad liegt eine Spannungsversorgung vor. Diese Spannungsversorgung kann beispielsweise mittels eines integrierten Schaltkreises ausgeführt sein. Dieser integrierte Schaltkreis erhält die Batteriespannung und wandelt die Batteriespannung in die für den Hardwarepfad notwendigen Spannungen um.

Es ist weiterhin von Vorteil, dass der erste Hardwarepfad die Spannungsversorgung des zweiten Hardwarepfades überwacht. Auch hier ist damit eine Überkreuz-Überwachung der Hardwarepfade erreicht, so dass ein hohes Maß an Sicherheit gewährleistet wird.

Vorteilhafter Weise können die Hardwarepfade letztlich in einer Kommunikationsschnittstelle verbunden sein. Bei dieser Kommunikationsschnittstelle kann es sich beispielsweise um eine Stromschnittstelle handeln, bei der die Daten auf einen Ruhestrom aufgeprägt werden. Diese Stromschnittstelle ist vorzugsweise unidirektional ausgebildet, so dass Daten nur in einer Richtung übertragen werden können. Solch eine Stromschnittstelle wird von der Anmelderin als PSI5 angeboten. Ein weiteres Beispiel für eine Realisierungsmöglichkeit von der Kommunikationsschnittstelle ist die SPI (Serial Peripherial Interface)-Übertragung, die eine Übertragung zwischen einem Master und einem oder mehreren Slaves in einem Steuergerät ermöglicht.

Es ist weiterhin vorteilhaft, dass die Kommunikationsschnittstelle redundant ausgeführt ist. In dem Sensor ist eine Kommunikationslogik (PSI5, SPI) vorgesehen. Diese Kommunikationslogik überträgt die Daten von einem internen Speicher gemäß dem geforderten Protokoll. Diese Kommunikationslogik wird erfindungsgemäß verdoppelt und so modifiziert, dass die zweite Kommunikationslogik beispielsweise eine eigene Adressierung aufweist. Falls dies nicht möglich ist, wie beispielsweise bei der Stromschnittstelle PSI5, dann muss die zweite Kommunikationslogik den Datenstrom der ersten Kommunikationslogik analysieren und mit den zu versendenden Daten vergleichen.

Es ist weiterhin von Vorteil, dass eine Plausibilisierungseinrichtung vorgesehen ist, die die Signale des Sensormoduls mit Plausibilisierungssignalen wenigstens eines weiteren Sensors vergleicht und die Ansteuerung in Abhängigkeit von diesem Vergleich beeinflusst. Damit wird demnach eine Redundanz bezüglich der Sensorik geschaffen, die auch örtlich voneinander unterschiedlich ist und es wird ausgenutzt, dass in einem Fahrzeug durch das Zusammensein von Fahrdynamikregelsystem und Airbagsystem eine Vielzahl von Sensoren vorhanden sein kann. Dabei kann beispielsweise das ESP-Sensormodul und ein ROSE-Sensormodul für die Erkennung eines Überrollvorgangs bezüglich ihrer Daten miteinander verglichen werden, um eine Plausibilisierung herzustellen. Zur Erhöhung der Robustheit gegen den Common-Mode-Fehler kann mindestens ein Sensierkanal eines gemeinsamen Drehratenbeschleunigungssensorbaustein durch einen redundanten Sensor im Fahrzeug durch Vergleich plausibilisiert werden. Vorteilhaft ist, möglichst viele Sensorelemente in einen einem gemeinsamen Clusterbaustein separat zu plausibilisieren, am Besten alle benötigten.

Für eine Roll-Over-Funktionalität, also eine Überroll-Erkennung können sogar bei entsprechender Ausstattung alle drei benötigten Größen durch redundante Sensorik plausibilisiert werden, wie es unten ersichtlich ist:
- Der Drehratensensor wird plausibilisiert durch einen Drehratensensor der aktiven Dämpferkontrolle und/oder durch einen Drehratensensor im ESP. Ein sogenannter low-g-Beschleunigungssensor in Fahrzeugquerrichtung, also Y-Richtung, wird plausibilisiert durch einen low-g-y des ESP-Systems. Ein low-g-Beschleunigungssensor in Z-Richtung wird plausibilisiert durch low-g-Z aus dem Bereich Chassis-Control für die Fahrwerksregelung.

Ausführungsbeispiele der Erfindung sind in der Zeichnung dargestellt und werden in der nachfolgenden Beschreibung näher erläutert.

Es zeigen:
- Figur 1: ein erstes Blockschaltbild der erfindungsgemäßen Vorrichtung,
- Figur 2: ein Blockschaltbild des erfindungsgemäßen Sensormoduls,
- Figur 3: ein zweites Blockschaltbild des erfindungsgemäßen Sensormoduls,
- Figur 4: ein drittes Blockschaltbild des erfindungsgemäßen Sensormoduls,
- Figur 5: ein viertes Blockschaltbild des erfindungsgemäßen Sensormoduls,
- Figur 6: eine Sensorverteilung im Fahrzeug und
- Figur 7: ein Flussdiagramm des erfindungsgemäßen Verfahrens.

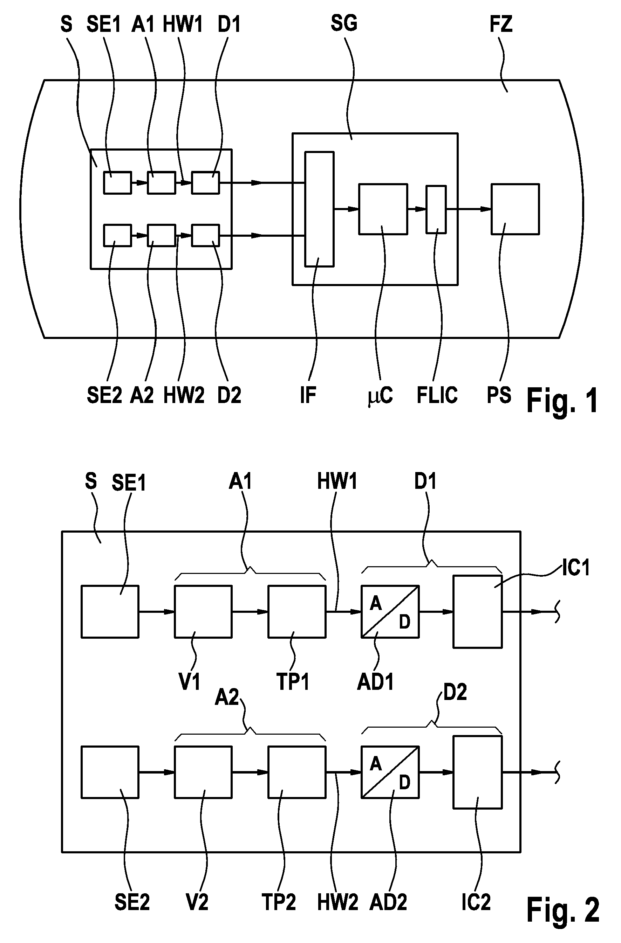

Figur 1 zeigt die erfindungsgemäße Vorrichtung in einem Fahrzeug FZ. Ein Sensormodul S weist zwei Sensoren bestehend jeweils aus einem Sensorelement SE1 bzw. SE2, einer Analogverarbeitung A1 bzw. A2 und einer Digitalverarbeitung D1 bzw. D2 der Sensorsignale auf. Die beiden Sensoren weisen unterschiedliche Hardwarepfade HW1 und HW2 auf, so dass die Signale der Sensorelemente SE1 und SE2 auch nach der Verarbeitung nicht über gemeinsame Elemente laufen. Dies soll erfindungsgemäß einen sogenannten Common-Mode-Fehler vermeiden. Die Hardwarepfade sind an einen Schnittstellenbaustein IF in einem Steuergerät SG zur Ansteuerung von Personenschutzmitteln PS angeschlossen. Die Sensorsignale werden im Steuergerät SG über einen internen Bus, beispielsweise den sogenannten SPI (serial peripherial interface bus) zu einer Auswerteschaltung, vorliegend einem Mikrocontroller µC übertragen. Der Mikrocontroller µC wertet in einer bekannten Art und Weise die Signale aus, um zu entscheiden, ob die Personenschutzmittel PS angesteuert werden sollen oder nicht. Dazu lädt der Mikrocontroller µC seinen Auswertealgorithmus aus einem vorliegend nicht dargestellten Speicher. Vorliegend sind nur die für die Erfindung wesentlichen Elemente dargestellt. Andere für den Betrieb notwendige Elemente sind der Einfachheit halber weggelassen worden.

Kommt der Mikrocontroller µC zu der Entscheidung, dass die Personenschutzmittel PS angesteuert werden sollen, dann überträgt der Mikrocontroller µC wiederum über den SPI-Bus ein Ansteuersignal an die Ansteuerschaltung FLIC. Bei der Ansteuerschaltung FLIC handelt es sich um einen oder mehreren ICs, die vorzugsweise wenigstens zwei Leistungsschalter aufweisen, die in Abhängigkeit von dem Ansteuersignal geschlossen werden und so zu einer Aktivierung der Personenschutzmittel führen. Es ist möglich, dass die Ansteuerschaltung FLIC diskret oder aus mehreren ICs aufgebaut ist. Auch die Schnittstelle IF kann hard- und/oder softwaremäßig ausgebildet sein.

Figur 2 zeigt ein weiteres Blockschaltbild des Sensormoduls S. Der obere Hardwarepfad HW1 weist wiederum das Sensorelement SE1 und als Analogverarbeitung A1 einen Verstärker V1 mit einem nachgeschalteten Tiefpassfilter TP1 auf. Vorliegend können auch Alternativen für den Filter und den Verstärker verwendet werden. Auch die Reihenfolge kann vertauscht werden.

Der Hardwarepfad HW1 weist jedoch auch noch den Digitalteil D1 auf, der aus einem Analog-Digital-Wandler AD1 und einem integrierten Schaltkreis IC1 besteht. Der Analog-Digital-Wandler digitalisiert die Sensorsignale, die analog durch A1 verarbeitet wurden. Der integrierte Schaltkreis IC1 führt eine weitere Signalaufbereitung durch und überträgt in einem vorgegebenen Format die Sensordaten an die Schnittstelle IF1.

Die gleichen Funktionen haben die Komponenten des Hardwarepfads HW2, der ein Sensorelement SE2, einen Analogteil A2 mit einem Verstärker V2 und einem Tiefpassfilter TP2 sowie einen Digitalteil D2 mit einem Analog-Digital-Wandler AD2 und einem IC2 aufweist.

Anstatt nur eines ICs können auch mehrere ICs verwendet werden. Auch die Verwendung eines Prozessors ist vorliegend möglich.

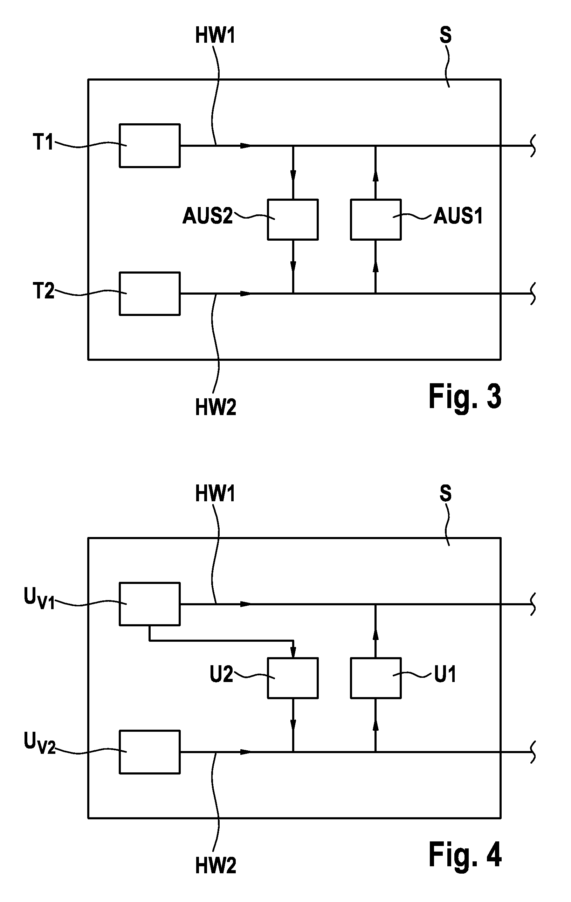

Figur 3 zeigt ein weiteres Blockschaltbild des Sensormoduls S. Der Einfachheit halber sind hier jedoch nur Taktgeneratoren T1 und T2 der jeweiligen Hardwarepfade HW1 und HW2 dargestellt. Der Taktgenerator T1 kann ein elektronischer Schwingkreis auf Basis eines RC-Glieds oder eines Quarzes sein, während der Taktgenerator T2 auf der Resonanzfrequenz des mikromechanischen Schwingers beruht. Nunmehr sind jedoch Verknüpfungen zwischen den Hardwarepfaden HW1 und HW2 vorgesehen, nämlich die Auswerteschaltungen aus 1 und aus 2. Die Auswerteschaltung aus 1 wertet den Takt im Hardwarepfad HW2 aus. Die Auswerteschaltung aus 2 wertet den Takt des Taktgenerators T1 aus. Damit ist eine Überkreuz-Überwachung möglich. Weiterhin sind die Takte T1 und T2 verschieden, um auch einem Common-Mode-Fehler entgegenzuwirken. Auf dem Taktgenerator T1 basiert der Zähler Z1 und entsprechend auf dem Taktgenerator T2 der Zähler Z2. Wenn Z1 einen vorgegebenen Wert erreicht hat, kontrolliert eine Logik den Zähler Z2 bezüglich seines Zählerstandes auf feste Grenzen. Danach werden die Zähler Z1 und Z2 auf Null zurückgesetzt. Somit können kontinuierlich die beiden Zähler überwacht werden.

Figur 4 zeigt erneut ein vereinfachtes Blockschaltbild des Sensorsmoduls S. Vorliegend weisen die beiden Hardwarepfade HW1 und HW2 jeweils unterschiedliche Spannungsversorgungen UV1 und UV2 auf. Wiederum wird ein Überkreuztest durchgeführt, und zwar durch die Schaltungen U1 und U2.

Die Überkreuztests in Figuren 3 und 4 führen bei einem Fehler zu einer entsprechenden Meldung, die an das Steuergerät SG über die Datenleitungen übertragen wird.

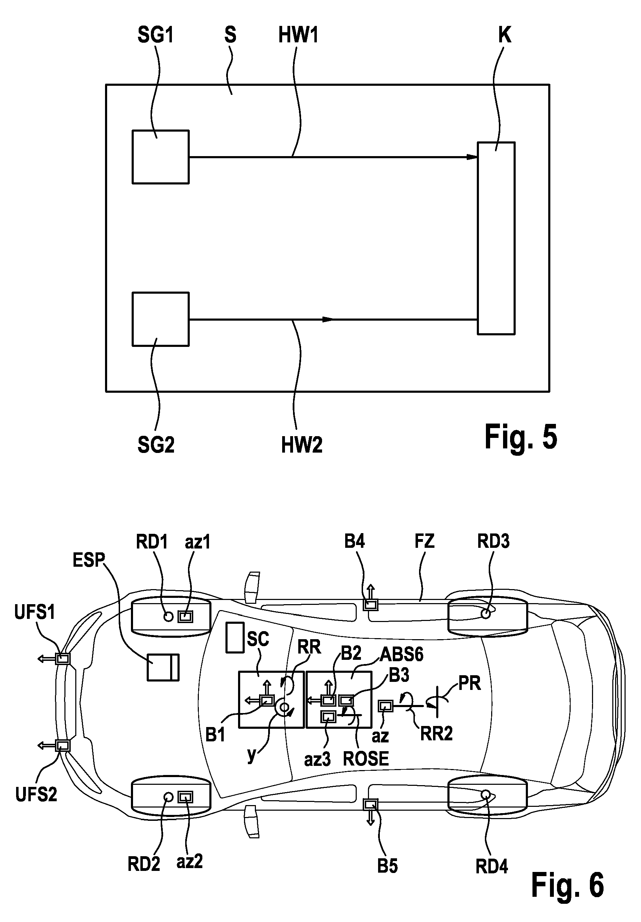

Figur 5 zeigt ein weiteres vereinfachtes Blockschaltbild des erfindungsgemäßen Sensormoduls S. Vorliegend werden die Hardwarepfade HW1 und HW2 für die Sensorelemente SE1 und SE2 an eine Kommunikationsschnittstelle K angeschlossen, die wie oben angegeben ausgebildet sein kann. Damit werden bereits im Sensormodul S die Hardwarepfade wieder miteinander vereinigt.

Figur 6 zeigt in einer schematischen Darstellung verschiedene Sensoren, die eine gegenseitige Plausibilisierung ermöglichen. Im Fahrzeug FZ gibt es die Raddrehzahlsensoren RD1 bis 4 mit den vertikal ausgerichteten Beschleunigungssensoren az1 und az2. Aus den Signalen der Raddrehzahlsensoren RD1 bis 4 kann eine Drehung um die Fahrzeughochachse ermittelt werden. Dies kann zur Plausibilisierung des Messsignals eines entsprechenden Drehratensensors, der die Drehung um die Fahrzeughochachse misst, verwendet werden.

Die vertikal ausgerichteten Beschleunigungssensoren az1 und az2 können zur Plausibilisierung beispielsweise des im Airbagsteuergerät ABSG angeordneten Beschleunigungssensors az3, der ebenfalls bezüglich seiner Empfindlichkeit in Richtung der Fahrzeughochachse orientiert ist, wie auch der Sensor az, verwendet werden.

Die Beschleunigungssensoren B1 im Sensorcluster SC und B2 im Airbagsteuergerät ABSG können beispielsweise durch die Upfrontsensoren UFS1 und UFS2 bezüglich der Fahrzeuglängsrichtung plausibilisiert werden. In Fahrzeugquerrichtung können die Beschleunigungssensoren B1 und B2 durch die Sensoren B4 und B5, die in den Fahrzeugseiten eingebaut sind und die in Fahrzeugquerrichtung orientiert sind, plausibilisiert werden. Auch das ESP-Steuergerät kann bezüglich seiner Sensorik hier mit den vorhandenen Sensoren plausibilisiert werden wie auch die Rose-Sensorik zur Überrollerkennung, die die Drehung um die Fahrzeuglängs- und -querachse misst; beispielsweise durch die Rollratensensierung RR und RR2 sowie die sogenannte Pitch-Raten-Sensierung PR. Der Beschleunigungssensor B3 kann durch die Upfrontsensoren UFS1 und UFS2 oder die Beschleunigungssensoren B1 und B2 plausibilisiert werden. Der Gierratensensor y im Sensorcluster SC kann durch die Raddrehzahlsensoren RD1-4 beispielsweise plausibilisiert werden.

Damit ist dargestellt, dass es eine Vielzahl von Möglichkeiten der gegenseitigen Plausibilisierung im Kraftfahrzeug gibt.

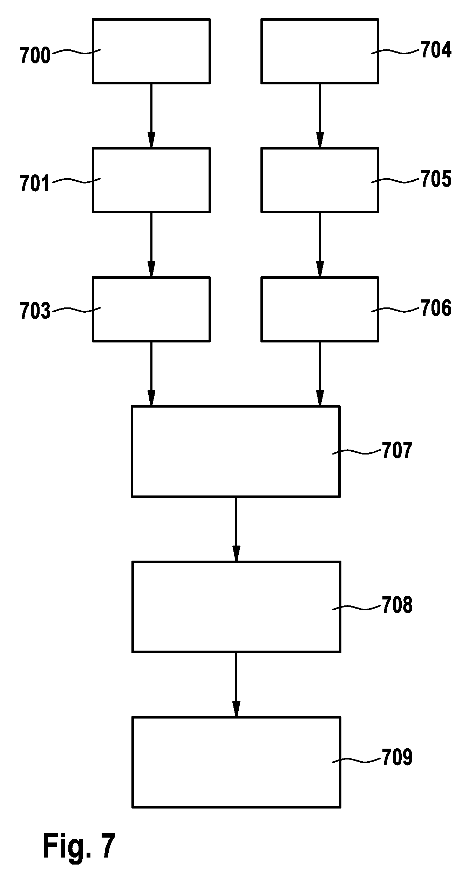

Figur 7 erläutert in einem Flussdiagramm das erfindungsgemäße Verfahren. Parallel laufen in zwei Strängen die Verarbeitung auf den unterschiedlichen Hardwarepfaden HW1 und HW2. Im Hardwarepfad HW1 wird im Verfahrensschritt 700 durch das Sensorelement SE1, das mikromechanisch realisiert ist, ein Messsignal erzeugt, das in Verfahrensschritt 701 einer Analogverarbeitung unterzogen wird, beispielsweise einer Verstärkung und einer Filterung. In Verfahrensschritt 703 erfolgt die Digitalisierung und eine Vorverarbeitung, so dass diese Daten dann übertragen werden können. Dies gilt auch für den zweiten Hardwarepfad, der die entsprechenden Verfahrensschritte 704, 705 und 706 durchläuft. Die Übertragung 707 kann gemeinsam oder getrennt zum Steuergerät SG geschehen. In Verfahrensschritt 708 werden dann die Sensorsignale vom Mikrocontroller µC verarbeitet und über den Verfahrensschritt 709 wird das Ansteuersignal erzeugt.

Es ist möglich, dass das Sensormodul sich innerhalb des Steuergeräts SG befindet.

## Patentansprüche

1. Vorrichtung zur Ansteuerung von Personenschutzmitteln (PS) mit einem Sensormodul (S), dessen Signale zur Ansteuerung bei Personenschutzmitteln verwendet werden, wobei das Sensormodul (S) dafür mit einer Auswerteschaltung (µC) verbindbar ist, wobei das Sensormodul (S) wenigstens zwei Sensoren in einem Gehäuse aufweist, wobei eine Signalaufbereitung für die wenigstens zwei Sensoren auf getrennten Hardwarepfaden erfolgt, und wobei die Signalaufbereitung für den jeweiligen Hardwarepfad (HW1, HW2) eine Analog-Digital-Umsetzung (AD1, AD2) aufweist, **dadurch gekennzeichnet, dass** die Analog-Digital-Umsetzungen (AD1, AD2) jeweils bei unterschiedlichen Frequenzen arbeiten.

2. Vorrichtung nach Anspruch 1, **dadurch gekennzeichnet, dass** für den jeweiligen Sensor ein jeweiliger Takt erzeugt wird.

3. Vorrichtung nach Anspruch 2, **dadurch gekennzeichnet, dass** ein erster Hardwarepfad (HW1) den Takt eines zweiten Hardwarepfads (HW2) überwacht.

4. Vorrichtung nach einem der vorhergehenden Ansprüche, **dadurch gekennzeichnet, dass** für jeden Hardwarepfad eine jeweilige Spannungsversorgung vorgesehen ist.

5. Vorrichtung nach Anspruch 4, **dadurch gekennzeichnet, dass** der erste Hardwarepfad (HW1) eine erste Spannungsversorgung des zweiten Hardwarepfads (HW2) überwacht.

6. Vorrichtung nach einem der vorhergehenden Ansprüche, **dadurch gekennzeichnet, dass** die jeweiligen Hardwarepfade (HW1, HW2) in einer Kommunikationsschnittstelle (K) verbunden sind.

7. Vorrichtung nach einem der vorhergehenden Ansprüche, **dadurch gekennzeichnet, dass** die Kommunikationsschnittstelle (K) redundant ausgeführt ist.

8. Vorrichtung nach einem der vorhergehenden Ansprüche, **dadurch gekennzeichnet, dass** eine Plausibilisierungseinrichtung vorgesehen ist, die die Signale des Sensormoduls mit Plausibilisierungssignalen wenigstens eines weiteren Sensors vergleicht und die Ansteuerung in Abhängigkeit von diesem Vergleich beeinflusst.

9. Verfahren zur Ansteuerung von Personenschutzmitteln in Abhängigkeit von Signalen eines Sensormoduls (S), wobei wenigstens zwei Sensoren für das Sensormodul (S) in einem Gehäuse verwendet werden und die Signalaufbereitung für die wenigstens zwei Sensoren auf getrennten Hardwarepfaden (HW1, HW2) erfolgt, wobei die Signalaufbereitung für den jeweiligen Hardwarepfad (HW1, HW2) jeweils eine Analog-Digital-Umsetzung (AD1, AD2) durchführt, **dadurch gekennzeichnet, dass** für die Analog-Digital-Umsetzung (AD1, AD2) jeweils unterschiedliche Frequenzen verwendet werden.

## Claims

1. Apparatus for actuating personal protection means (PS), having a sensor module (S) whose signals are used for actuation in personal protection means, the sensor module (S) being able to be connected to an evaluation circuit (µC) for this purpose, the sensor module (S) having at least two sensors in a housing, signal conditioning for the at least two sensors being carried out on separate hardware paths, and the signal conditioning for the respective hardware path (HW1, HW2) having analogue/digital conversion (AD1, AD2), **characterized in that** the analogue/digital conversions (AD1, AD2) each operate at different frequencies.

2. Apparatus according to Claim 1, **characterized in that** a respective clock is generated for the respective sensor.

3. Apparatus according to Claim 2, **characterized in that** a first hardware path (HW1) monitors the clock of a second hardware path (HW2).

4. Apparatus according to one of the preceding claims, **characterized in that** a respective voltage supply is provided for each hardware path.

5. Apparatus according to Claim 4, **characterized in that** the first hardware path (HW1) monitors a first voltage supply of the second hardware path (HW2).

6. Apparatus according to one of the preceding claims, **characterized in that** the respective hardware paths (HW1, HW2) are connected in a communication interface (K).

7. Apparatus according to one of the preceding claims, **characterized in that** the communication interface (K) has a redundant design.

8. Apparatus according to one of the preceding claims, **characterized in that** provision is made of a plausibility checking device which compares the signals from the sensor module with plausibility checking signals from at least one further sensor and influences the actuation on the basis of this comparison.

9. Method for actuating personal protection means on the basis of signals from a sensor module (S), at least two sensors being used for the sensor module (S) in a housing and the signal conditioning for the at least two sensors being carried out on separate hardware paths (HW1, HW2), the signal conditioning for the respective hardware path (HW1, HW2) respectively carrying out an analogue/digital conversion (AD1, AD2), **characterized in that** respectively different frequencies are used for the analogue/digital conversion (AD1, AD2).

## Revendications

1. Dispositif de commande de moyens de protection de personnes (PS) comportant un module à capteurs (S) dont des signaux sont utilisés pour commander des moyens de protection de personnes, dans lequel le module à capteurs (S) peut à cet effet être connecté à un circuit d'évaluation (µC), dans lequel le module à capteurs (S) comporte au moins deux capteurs dans un boîtier, dans lequel un traitement de signal est effectué pour les au moins deux capteurs sur des trajets matériels séparés, et dans lequel le traitement de signal comporte une conversion analogique-numérique (AD1, AD2) pour le trajet matériel (HW1, HW2) respectif, **caractérisé en ce que** les conversions analogiques-numériques (AD1, AD2) fonctionnent respectivement à des fréquences différentes.

2. Dispositif selon la revendication 1, **caractérisé en ce qu'**une horloge respective est générée pour le capteur respectif.

3. Dispositif selon la revendication 2, **caractérisé en ce qu'**un premier trajet matériel (HW1) surveille l'horloge d'un second trajet matériel (HW2).

4. Dispositif selon l'une quelconque des revendications précédentes, **caractérisé en ce qu'**une alimentation en tension respective est prévue pour chaque trajet matériel.

5. Dispositif selon la revendication 4, **caractérisé en ce que** le premier trajet matériel (HW1) surveille une première alimentation en tension du second trajet matériel (HW2).

6. Dispositif selon l'une quelconque des revendications précédentes, **caractérisé en ce que** les trajets matériels (HW1, HW2) respectifs sont connectés dans une interface de communication (K).

7. Dispositif selon l'une quelconque des revendications précédentes, **caractérisé en ce que** l'interface de communication (K) est réalisée de manière redondante.

8. Dispositif selon l'une quelconque des revendications précédentes, **caractérisé en ce qu'**il est prévu un dispositif de détermination de vraisemblance qui compare les signaux du module à capteurs à des signaux de vraisemblance d'au moins un capteur et qui agit sur la commande en fonction de ladite comparaison.

9. Procédé de commande de moyens de protection de personnes en fonction de signaux d'un module à capteurs (S), dans lequel au moins deux capteurs destinés au module à capteurs (S) sont utilisés dans un boîtier et le traitement de signal destiné aux au moins deux capteurs est effectué sur des trajets matériels (HW1, HW2) différents, dans lequel le traitement de signal destiné au trajet matériel (HW1, HW2) respectif effectue une conversion analogique-numérique (AD1, AD2), **caractérisé en ce que** des fréquences différentes sont respectivement utilisées pour la conversion analogique-numérique (AD1, AD2).
